# EUROPÄISCHE PATENTSCHRIFT

(11) **EP 4 025 637 B1**
(45) Veröffentlichungstag und Bekanntmachung des Hinweises auf die Patenterteilung: **07.08.2024**
(21) Anmeldenummer: 20764630.8
(22) Anmeldetag: 28.08.2020
(51) Int. Cl.: C08K 5/00, C08K 5/12

(54) **DISPERSIONSKLEBSTOFFE**
DISPERSION ADHESIVES
ADHÉSIF EN DISPERSION

(30) Priorität: 04.09.2019 EP 19195334
(43) Veröffentlichungstag der Anmeldung: 13.07.2022
(73) Patentinhaber: Covestro Deutschland AG, 51373 Leverkusen (DE)
(72) Erfinder: KRAUS, Harald, 51371 Leverkusen (DE); LIBERATI, Robert, 50354 Hürth- Efferen (DE); KUEKER, Peter, 51377 Leverkusen (DE); MELCHIORS, Martin, 42799 Leichlingen (DE)
(74) Vertreter: Levpat
(86) Internationale Anmeldenummer: PCT/EP2020/074048
(87) Internationale Veröffentlichungsnummer: WO 2021/043674

(56) Entgegenhaltungen:
- EP-A1- 3 514 186
- EP-A2- 2 090 603

## Beschreibung

Die Erfindung betrifft Formulierungen wässriger Dispersionsklebstoffe auf Basis wässriger Polyurethan- bzw. Polyurethan-Harnstoffdispersionen, ein Verfahren zu deren Herstellung, sowie die Verwendung der Dispersionsklebstoffe zur Verklebung von Schaumsubstraten nach dem Sprühkoagulationsverfahren.

Bei der Verklebung von Schaumsubstraten mit anderen Substraten, beispielsweise bei den Kombinationen Schaum-Schaum, Schaum-Holz und Schaum-Kunststoff, werden überwiegend Polychloropren-Dispersionsklebstoffe nach dem Sprühkoagulationsverfahren eingesetzt. Bei diesem Verfahren werden der Klebstoff sowie ein Koagulationsmittel separat in eine Sprühpistole gefördert, im Sprühstrahl vermischt und koaguliert. Da die Vermischung erst im Sprühstrahl stattfindet, ist keine Topfzeit zu beachten. Zudem verbleibt der koagulierte Klebstoff an der zu verklebenden Substratoberfläche und diffundiert nicht oder nur zu einem geringen Teil in die Porenstruktur der Schaumsubstrate. Häufig werden dabei hohe Anfangsfestigkeiten, ausreichend lange offene Zeiten und gute Wärmebeständigkeiten erzielt.

Wichtige Anwendungsgebiete für dieses Sprühkoagulationsverfahren sind die Herstellung von Matratzen und Sitzmöbeln. Insbesondere aus den skandinavischen Ländern kommt die Forderung nach Organochlor-freien Alternativen für die Polychloropren-Dispersionsklebstoffe, um beispielsweise die Anforderungen des Nordic Ecolabels erfüllen zu können. Zusätzlich sollen sie sich durch hohe Anfangsfestigkeiten, eine ausreichend lange offene Zeit sowie gute Wärmebeständigkeiten auszeichnen.

Klebstoffe auf Basis von wässrigen Polyurethan-Dispersionen haben sich weltweit in anspruchsvollen industriellen Anwendungen etabliert, zum Beispiel bei der Schuhfertigung, der Verklebung von Teilen für die KFZ-Innenausstattung, der Folienlaminierung oder der Verklebung von textilen Substraten.

Bei der Verwendung solcher Klebstoffe auf Basis von wässrigen Polyurethan-Dispersionen zum Kleben von Substraten wird häufig nach dem Thermoaktivierverfahren gearbeitet. Hierbei wird die Dispersion auf das Substrat aufgebracht, und nach vollständiger Verdunstung des Wassers wird die Klebstoffschicht durch Erwärmen, z. B. mit einem Infrarotstrahler, aktiviert und in einen klebfähigen Zustand überführt. Die Temperatur, bei der der Klebstofffilm klebrig wird, bezeichnet man als Aktiviertemperatur.

Bei der Verwendung von Polyurethan- bzw. Polyurethan-Polyharnstoff-Dispersionen kann aber auch nach dem Verfahren der Nassverklebung gearbeitet werden, d.h. die Durchführung der Verklebung erfolgt unmittelbar nach dem Klebstoffauftrag. Bis zum Abbinden des Klebstoffes ist dabei eine mechanische Fixierung der zu verbindenden Teile erforderlich. Dieses Verfahren wird häufig zur Verklebung von Holz oder textilen Substraten verwendet.

Sowohl das Thermoaktivierverfahren als auch das Verfahren der Nassverklebung sind für die Verklebung von Schaumsubstraten wenig geeignet. Insbesondere die langsame Verdampfung des Wassers erfordert lange Wartezeiten zwischen Klebstoffauftrag und Klebevorgang oder entsprechende Trockenanlagen. Zudem kann ein nicht unerheblicher Teil des Klebstoffs vor oder während der Trocknung in die Poren der Schaumsubstrate eindiffundieren und steht dann nicht mehr für die eigentliche Klebung zur Verfügung.

Die im Markt etablierten Klebstoffe auf Basis von wässrigen Polyurethan-Dispersionen eignen sich in der Regel nicht für die Anwendung des Sprühkoagulationsverfahrens, da sie häufig nicht ausreichend schnell koagulieren, zu schlechten Wärmebeständigkeiten führen und insbesondere auf schwierigen Substraten, wie zum Beispiel Schäumen mit hoher Rückstellkraft, keine ausreichende Haftung und Festigkeit zeigen. Auch beträgt die offene Zeit, d.h. die Zeitspanne zwischen Auftragen des Klebstoffs bis zum Zusammenfügen der Fügeteile, in der noch eine ausreichend gute Klebeverbindung erhalten wird, meist weniger als 2 Minuten. Für viele Klebeprozesse wird eine deutlich längere Zeitspanne benötigt.

In der WO 2013/053786 A1 werden wässrige Polyurethandispersionen beschrieben, deren Polymer eine Schmelztemperatur im Bereich von 30 °C bis 50 °C, bestimmt durch dynamische Differenz-Thermoanalyse gemäß DIN 65467 bei einer Aufheizrate von 20 K/min, aufweist, wobei das Polymer aus zwei unterschiedlich kristallisierenden Polyesterpolyolen in vorgegebenen Mengenverhältnissen erhältlich ist. Diese Polyurethandispersionen eignen sich in erster Linie als Kaltkontaktklebstoffe, sind aber auch mittels Sprühkoagulationsverfahren einsetzbar. Allerdings sind die dabei erzielbaren Festigkeiten für die meisten Schaumverklebungsanwendungen unzureichend.

Mit Luphen^{®} D DS 3548 der BASF AG (Ludwigshafen, Deutschland) wird eine Epoxidharz-modifizierte Polyurethandispersion angeboten, die unter anderem auch für das Sprühkoagulationsverfahren geeignet sein soll. Basis des dabei verwendeten Epoxidharzes ist Bisphenol-A-diglycidylether. Da diese Epoxidharze insbesondere von Endverbrauchern äußerst kritisch gesehen und deshalb in der Regel abgelehnt werden, verlangt der Markt nach Klebstoffen und sonstigen Produkten, die nicht auf Epoxidharzen basieren.

Die WO 2014/182170 A1 beschreibt die Durchführung des Sprühkoagulationsverfahrens mittels eines speziellen Airless-Spray-Verfahrens. Dazu werden sowohl Mischungen aus Polychloroprendispersionen und Tackifierdispersionen als auch aus Polyurethandispersionen und Tackifierdispersionen eingesetzt. Diese werden in dieser Schrift jedoch nicht weiter spezifiziert. Als Anwendungsgebiete werden Schaumverklebungen im Bereich Matratzen- und Möbelfertigung genannt.

In US 2015/0079339 A1 werden Mehrschichtartikel, unter anderem auch aus Schaumsubstraten bestehend, beschrieben, die durch Verklebung mit einer Polyurethandispersion im Temperaturbereich von 100 bis 200 °C hergestellt werden. Um eine Penetration der Klebstoffdispersion in die Poren der Substrate zu verhindern, können optional Koagulationsmittel zugesetzt werden, wobei das Sprühkoagulationsverfahren aber nicht zum Einsatz kommt.

EP 3 514 186 A1 offenbart Dispersionsklebstoffe auf Basis wässriger Polyurethan- bzw. Polyurethan-Harnstoffdispersionen, die die Anforderungen für die industrielle Schuhfertigung erfüllen, insbesondere bei gleichzeitiger Trocknung und Aktivierung bei niedrigen Temperaturen, sowie die Verwendung der Dispersionsklebstoffe zur Herstellung von Klebstoffverbunden.

EP 2 090 603 A2 offenbart Dispersionsklebstoffe.

Die Aufgabe der vorliegenden Erfindung bestand somit in der Bereitstellung einer Organochlor- und Epoxid-freien Alternative für Polychloropren-Dispersionsklebstoffe für die Verklebung von Schaumsubstraten nach dem Sprühkoagulationsverfahren, die die Nachteile des Standes der Technik nicht aufweist und die auch auf schwierigen Substraten, insbesondere bei Schäumen mit hoher Rückstellkraft, ausreichende Haftung und Festigkeit zeigt. Darüber hinaus soll sie eine hohe Wärmebeständigkeit, insbesondere von mindestens 70 °C, und eine lange offene Zeit, insbesondere von mindestens 5 Minuten, ermöglichen.

Überraschend wurde nun gefunden, dass wässrige Klebstoffformulierungen, enthaltend eine Mischung aus einer wässrigen Polyurethan- bzw. Polyurethan-Harnstoff-Dispersion, mindestens einem Weichmacher sowie optional mindestens einem Tackifierharz sich für die Verklebung von Schaumsubstraten nach dem Sprühkoagulationsverfahren eignen und die Nachteile des Standes der Technik nicht aufweisen.

Gegenstand der vorliegenden Erfindung sind somit Formulierungen enthaltend eine Mischung aus
I. einer wässrigen Polyurethan- bzw. Polyurethan-Harnstoff-Dispersion, enthaltend als disperse Phase mindestens ein Polymer A), das nach der Trocknung teilkristallin oder kristallin ist und eine Schmelztemperatur im Bereich von 30 bis 80 °C und eine Schmelzenthalpie von ≥ 35 J/g besitzt,
II. mindestens einem Weichmacher B)
III. optional mindestens einem Tackifierharz C)
   wobei die Mischung, bezogen auf den insgesamt enthaltenen Feststoff,
   60 bis 80 Gew.-% des mindestens einen Polymers A),
   20 bis 40 Gew.-%, bevorzugt 21 bis 40 Gew.-%, des mindestens einen Weichmachers B) und
   0 bis 10 Gew.-% des mindestens einen Tackifierharzes C) enthält
   und sich die Mengenanteile von A), B) und C) zu 100 Gew.-% addieren.

Bevorzugt enthält die Mischung, bezogen auf den insgesamt enthaltenen Feststoff,
65 bis 80 Gew.-% des mindestens einen Polymers A),
20 bis 35 Gew.-%, bevorzugt 21 bis 35 Gew.-%, des mindestens einen Weichmachers B) und
0 bis 10 Gew.-% des mindestens einen Tackifierharzes C),
wobei sich die Mengenanteile von A), B) und C) zu 100 Gew.-% addieren.

Besonders bevorzugt enthält die Mischung, bezogen auf den Feststoff,
70 bis 80 Gew.-% des mindestens einen Polymers A),
20 bis 30 Gew.-%, bevorzugt 21 bis 30 Gew.-%, des mindestens einen Weichmachers B) und
0 bis 10 Gew.-% des mindestens einen Tackifierharzes C),
wobei sich die Mengenanteile von A), B) und C) zu 100 Gew.-% addieren.

Die im Zusammenhang mit der vorliegenden Erfindung als Polyurethan-Dispersionen bezeichneten Dispersionen enthalten als disperse Phase mindestens ein Polymer, das ein oder mehrere Polyurethane im engeren Sinn sein kann, also solche Polymere, die durch Polymerisation von Polyolen und Polyisocyanaten erhalten werden, aber es können auch solche sein, bei denen als Aufbau-Komponenten auch Mono- und/oder Diamine eingesetzt werden, gegebenenfalls als Kettenverlängerer. Somit werden die erfindungsgemäß einsetzbaren Dispersionen als wässrige Polyurethan- bzw. Polyurethan-Harnstoff-Dispersionen bezeichnet.

Als teilkristallin oder kristallin wird ein Polymer bezeichnet, wenn es in der DSC-Messung nach DIN 65467 bei einer Aufheizrate von 20 K/min einen Schmelzpeak aufweist. Der Schmelzpeak wird durch das Aufschmelzen regelmäßiger Teilstrukturen im Polymer verursacht. Die Schmelztemperatur der aus den erfindungsgemäßen Formulierungen erhaltenen Polymere bzw. Polymerschichten liegt dabei bevorzugt in einem Bereich von 35 bis 80 °C, besonders bevorzugt von 40 bis 70 °C, ganz besonders bevorzugt von 42 bis 55 °C. Die Schmelzenthalpie der aus den erfindungsgemäßen Formulierungen erhaltenen Polymerschichten ist ≥ 35 J/g, bevorzugt ≥ 40 J/g, besonders bevorzugt ≥ 45 J/g. Ausgewertet wird die erste Aufheizung, um auch langsam kristallisierende Polymere zu erfassen.

Während die Lehre der vorliegenden Erfindung grundsätzlich mit jedem dispergierten Polyurethan- bzw. Polyurethan-Harnstoff-Polymer als Polymer A) verwirklicht werden kann, ist erfindungsgemäß das mindestens eine Polymer A) bevorzugt aufgebaut aus
A(i). mindestens einem kristallinen oder teilkristallinen difunktionellen Polyesterpolyol mit einem zahlenmittleren Molekulargewicht von wenigstens 400 g/mol und einer Schmelztemperatur von wenigstens 35 °C und einer Schmelzwärme von wenigstens 35 J/g,
A(ii). optional mindestens einer difunktionellen Polyolkomponente mit einem zahlenmittleren Molekulargewicht von 62 bis 399 g/mol,
A(iii). einer Isocyanatkomponente
A(iv). mindestens einer gegenüber Isocyanat reaktiven Komponente, die mindestens eine ionische oder potentiell ionische Gruppe trägt,
   und
A(v). optional weiteren gegenüber Isocyanat reaktiven Komponenten.

Die erfindungsgemäßen wässrigen Dispersionen enthalten 15 bis 60 Gew.-% des mindestens einen Polymers und 40 bis 85 Gew.-% Wasser, bevorzugt 30 bis 50 Gew.-% des mindestens einen Polymers und 50 bis 70 Gew.-% Wasser, besonders bevorzugt 40 bis 50 Gew.-% des mindestens einen Polymers und 50 bis 60 Gew.-% Wasser.

Das mindestens eine Polymer enthält 50 bis 95 Gew.-% des Bestandteils A(i), 0 bis 10 Gew.-% des Bestandteils A(ii), 4 bis 25 Gew.-% des Bestandteils A(iii), 0,5 bis 10 Gew.-% des Bestandteils A(iv) und 0 bis 30 Gew.-% des Bestandteils A(v), wobei die Summe der Bestandteile 100 Gew.-% ergibt.

In einer bevorzugten Form der Erfindung enthält das mindestens eine Polymer 65 bis 92 Gew.-% des Bestandteils A(i), 0 bis 5 Gew.-% des Bestandteils A(ii), 6 bis 15 Gew.-% des Bestandteils A(iii), 0,5 bis 5 Gew.-% des Bestandteils A(iv) und 0 bis 25 Gew.-% des Bestandteils A(v), wobei die Summe der Bestandteile 100 Gew.-% ergibt.

In einer besonders bevorzugten Form der Erfindung enthält das mindestens eine Polymer 75 bis 92 Gew.-% des Bestandteils A(i)), 0 bis 5 Gew.-% des Bestandteils A(ii), 8 bis 15 Gew.-% des Bestandteils A(iii), 0,5 bis 4 Gew.-% des Bestandteils A(iv) und 0 bis 15 Gew.-% des Bestandteils A(v), wobei die Summe der Bestandteile 100 Gew.-% ergibt.

In einer ganz besonders bevorzugten Form der Erfindung enthält das mindestens eine Polymer 80 bis 90 Gew.-% des Bestandteils A(i), 0 bis 3 Gew.-% des Bestandteils A(ii), 8 bis 14 Gew.-% des Bestandteils A(iii), 0,5 bis 3 Gew.-% des Bestandteils A(iv) und 0 bis 10 Gew.-% des Bestandteils A(v), wobei die Summe der Bestandteile 100 Gew.-% ergibt.

Als kristalline oder teilkristalline difunktionelle Polyesterpolyole A(i) kommen insbesondere lineare oder auch schwach verzweigte Polyesterpolyole in Betracht, die auf Dicarbonsäuren und/oder deren Derivaten, wie Anhydride, Ester oder Säurechloride und bevorzugt aliphatischen, linearen Polyolen basieren. Auch Mischungen von Dicarbonsäuren und/oder deren Derivate sind geeignet. Geeignete Dicarbonsäuren sind beispielsweise Adipinsäure, Bernsteinsäure, Sebacinsäure oder Dodecandisäure. Bevorzugt sind Bernsteinsäure, Adipinsäure und Sebacinsäure und deren Mischungen, besonders bevorzugt sind Bernsteinsäure und Adipinsäure und deren Mischungen, ganz besonders bevorzugt ist Adipinsäure. Diese werden in Mengen von mindestens 90 mol-%, bevorzugt von 95 bis 100 mol-%, bezogen auf die Gesamtmenge aller Carbonsäuren, eingesetzt.

Die difunktionellen Polyesterpolyole A(i) können beispielsweise durch Polykondensation von Dicarbonsäuren mit Polyolen hergestellt werden. Die Polyole haben bevorzugt ein Molekulargewicht von 62 bis 399 g/mol, bestehen aus 2 bis 12 C-Atomen, sind vorzugsweise unverzweigt, difunktionell und weisen bevorzugt primäre OH-Gruppen auf.

Beispiele für Polyole, die für die Herstellung der Polyesterpolyole A(i) verwendet werden können, sind mehrwertige Alkohole, wie z.B. Ethandiol, Di-, Tri-, Tetraethylenglykol, 1,2-Propandiol, Di-, Tri-, Tetrapropylenglykol, 1,3-Propandiol, Butandiol-1,4, Butandiol-1,3, Butandiol-2,3, Pentandiol-1,5, Hexandiol-1,6, 2,2-Dimethyl-1,3-propandiol, 1,4-Dihydroxycyclohexan, 1,4-Dimethylolcyclohexan, Octandiol-1,8, Decandiol-1,10, Dodecandiol-1,12 oder deren Gemische.

Bevorzugte Polyolkomponenten für die Polyesterpolyole A(i) sind Ethandiol-1,2, Butandiol-1,4 und Hexandiol-1,6, besonders bevorzugt sind Butandiol-1,4 und Hexandiol-1,6, ganz besonders bevorzugt ist Butandiol-1,4.

Die Polyesterpolyole A(i) können aus einem oder mehreren Polyolen aufgebaut sein. In einer bevorzugten Ausführungsform der vorliegenden Erfindung sind sie nur aus einem Polyol aufgebaut.

Wenn die kristallinen oder teilkristallinen difunktionellen Polyesterpolyole mit einem zahlenmittleren Molekulargewicht von wenigstens 400 g/mol und einer Schmelztemperatur von wenigstens 35 °C eine Schmelzwärme von wenigstens 50 J/g aufweisen, so hat das unter Verwendung desselben hergestellte Polymer regelmäßig eine Schmelzwärme von ≥ 35 J/g. Falls gewünscht kann eine Adjustierung der Schmelzwärme des Polymers durch eine leichte Veränderung des Gehaltes an Polyesterpolyol A(i) in der Zusammensetzung oder durch eine geringe Variation der Schmelzwärme des Polyesterpolyols erreicht werden. Diese Maßnahmen erfordern lediglich orientierende Versuche und liegen völlig innerhalb der praktischen Erfahrung des Durchschnittsfachmanns auf diesem Gebiet.

Die Herstellung von Polyesterpolyolen A(i) ist aus dem Stand der Technik bekannt.

Das zahlenmittlere Molekulargewicht der Polyesterpolyole A(i) liegt vorzugsweise bei 400 bis 4000 g/mol, weiter bevorzugt 1000 bis 3000 g/mol, besonders bevorzugt 1500 bis 2500 g/mol, ganz besonders bevorzugt 1800 bis 2400 g/mol.

Die Schmelztemperatur der kristallinen bzw. teilkristallinen Polyesterpolyole liegt in der Regel mindestens bei 35 °C, bevorzugt 40 bis 80 °C, besonders bevorzugt 42 bis 60 °C und ganz besonders bevorzugt 45 bis 52 °C. Die Schmelzwärme beträgt ≥ 35 J/g, bevorzugt ≥ 40 J/g und besonders bevorzugt ≥ 50 J/g.

Als Aufbaukomponente A(ii) geeignete difunktionelle Polyolkomponenten mit einem Molekulargewicht von 62 bis 399 g/mol sind beispielsweise die zur Herstellung der Polyesterpolyole A(i) genannten Polyole. Auch niedermolekulare Polyesterdiole, Polyetherdiole, Polycarbonatdiole oder andere Polymerdiole sind prinzipiell geeignet, sofern sie ein Molekulargewicht von 62 bis 399 g/mol aufweisen.

Dem Durchschnittsfachmann ist bekannt, dass das zahlenmittlere Molekulargewicht von Polymerdiolen beispielsweise aus der OH-Zahl (Hydroxylzahl) berechnet werden kann. Bei monomeren Polyolen entspricht das Molekulargewicht der absoluten Molekülmasse in g/mol.

Als Aufbaukomponenten A(iii) sind beliebige organische Verbindungen geeignet, die mindestens zwei freie Isocyanatgruppen pro Molekül aufweisen. Bevorzugt werden Diisocyanate Y(NCO)₂ eingesetzt, wobei Y für einen zweiwertigen aliphatischen Kohlenwasserstoffrest mit 4 bis 12 Kohlenstoffatomen, einen zweiwertigen cycloaliphatischen Kohlenwasserstoffrest mit 6 bis 15 Kohlenstoff-Atomen, einen zweiwertigen aromatischen Kohlenwasserstoffrest mit 6 bis 15 Kohlenstoff-Atomen oder einen zweiwertigen araliphatischen Kohlenwasserstoffrest mit 7 bis 15 Kohlenstoffatomen steht. Beispiele derartiger bevorzugt einzusetzender Diisocyanate sind Tetramethylendiisocyanat, Methylpentamethylendiisocyanat, Hexamethylendiisocyanat, Dodecamethylendiisocyanat, 1,4-Diisocyanato-cyclohexan, 1-Isocyanato-3,3,5-trimethyl-5-isocyanato-methyl-cyclohexan, 4,4'-Diisocyanato-dicyclohexyl-methan, 4,4'-Diisocyanato-dicyclohexyl-propan-(2,2), 1,4-Di-isocyanatobenzol, 2,4-Diisocyanatotoluol, 2,6-Diisocyanatotoluol, 4,4'-Diisocyanato-diphenylmethan, 2,2'- und 2,4'-Diisocyanatodiphenylmethan, Tetramethylxylylendiisocyanat, p-Xylylendiisocyanat, p-Isopropylidendiisocyanat sowie aus diesen Verbindungen bestehende Gemische.

Es ist auch möglich, die in der Polyurethanchemie an sich bekannten höherfunktionellen Polyisocyanate oder auch an sich bekannte modifizierte, beispielsweise Carbodiimidgruppen, Allophanatgruppen, Isocyanuratgruppen, Urethangruppen und/oder Biuretgruppen aufweisende Polyisocyanate anteilig mitzuverwenden.

Neben diesen einfachen Diisocyanaten sind auch solche Polyisocyanate geeignet, die Heteroatome in dem die Isocyanatgruppen verknüpfenden Rest enthalten und/oder eine Funktionalität von mehr als 2 Isocyanatgruppen pro Molekül besitzen. Erstere sind z.B. durch Modifizierung einfacher aliphatischer, cycloaliphatischer, araliphatischer und/oder aromatischer Diisocyanate hergestellte, aus mindestens zwei Diisocyanaten aufgebaute Polyisocyanate mit Uretdion-, Isocyanurat-, Urethan-, Allophanat-, Biuret-, Carbodiimid-, Imino-oxadiazindion- und/oder Oxadiazintrion-Struktur. Als Beispiel für ein nicht-modifiziertes Polyisocyanat mit mehr als 2 Isocyanatgruppen pro Molekül sei z.B. 4-Isocyanatomethyl-1,8-octandiisocyanat (Nonantriisocyanat) genannt.

Besonders bevorzugte Aufbaukomponenten A(iii) sind Hexamethylendiisocyanat (HDI) und 1-Iso-cyanato-3,3,5-trimethyl-5-isocyanatomethyl-cyclohexan (IPDI) sowie deren Gemische.

Bevorzugte gegenüber Isocyanat reaktive Komponenten A(iv), die mindestens eine ionische oder potentiell ionische Gruppe tragen, sind Mono- und Dihydroxycarbonsäuren, Mono- und Diamino-carbonsäuren, Mono- und Dihydroxysulfonsäuren, Mono- und Diaminosulfonsäuren sowie Mono- und Dihydroxyphosphonsäuren oder Mono- und Diaminophosphonsäuren und deren Alkali- und Ammoniumsalze. Beispiele sind Dimethylolpropionsäure, Dimethylolbuttersäure, Hydroxypivalinsäure, N-(2-Aminoethyl)-(3-alanin, N-(2-Aminoethyl)-2-aminoethansulfonsäure, N-(2-Aminoethyl)-2-aminoethancarbonsäure Ethylendiaminpropyl- oder -butylsulfonsäure, 1,2- oder 1,3-Propylendiamin-β-ethylsulfonsäure, Äpfelsäure, Zitronensäure, Glykolsäure, Milchsäure, Glycin, Alanin, Taurin, Lysin, 3,5-Diaminobenzoesäure, ein Additionsprodukt von IPDI und Acrylsäure (EP-A 0 916 647, Beispiel 1) und dessen Alkali- und/oder Ammoniumsalze; das Addukt von Natriumbisulfit an Buten-2-diol-1,4, Polyethersulfonat, das propoxylierte Addukt aus 2-Butendiol und NaHSO₃, z.B. beschrieben in der DE-A 2 446 440 (Seite 5-9, Formel I-III). Für die Salzbildung gut geeignet sind Natrium-, Kalium-, Lithium- und Calcium-Hydroxid sowie tertiäre Amine wie Triethylamin, Dimethylcyclohexylamin und Ethyldiisopropylamin. Es können auch andere Amine zur Salzbildung eingesetzt werden, wie z.B. Ammoniak, Diethanolamin, Triethanolamin, Dimethylethanolamin, Methyldiethanolamin, Aminomethylpropanol und auch Mischungen der genannten und auch anderer Amine. Sinnvollerweise werden diese Amine erst nach der weitgehenden Umsetzung der Isocyanatgruppen zugegeben.

Weiter als Komponente A(iv) geeignet sind durch Zugabe von Säuren in kationische Gruppen überführbare Bausteine wie N-Methyl-diethanolamin.

Besonders bevorzugte Komponenten A(iv) sind solche, die über Carboxy- und/oder Carboxylat- und/oder Sulfonatgruppen verfügen.

Ganz besonders bevorzugt sind die Natriumsalze der N-(2-Aminoethyl)-2-aminoethansulfonsäure und der N-(2-Aminoethyl)-2-aminoethancarbonsäure, insbesondere der N-(2-Aminoethyl)-2-aminoethansulfonsäure. Weiterhin ganz besonders bevorzugt sind die Salze der Dimethylolpropionsäure.

Gegenüber Isocyanaten reaktive Komponenten A(v) können beispielsweise Polyoxyalkylenether, die mindestens eine Hydroxy- oder Aminogruppe enthalten, sein. Die häufig verwendeten Polyalkylenoxidpolyetheralkohole sind in an sich bekannter Weise durch Alkoxylierung geeigneter Startermoleküle zugänglich. Für die Alkoxylierungsreaktion geeignete Alkylenoxide sind insbesondere Ethylenoxid und Propylenoxid, die einzeln oder auch zusammen bei der Alkoxylierungsreaktion eingesetzt werden können.

Weitere gegenüber Isocyanat reaktive Komponenten A(v) sind beispielsweise Monoamine, Diamine und / oder Polyamine sowie deren Gemische.

Beispiele für Monoamine sind aliphatische und/oder alicyclische primäre und/oder sekundäre Monoamine wie Ethylamin, Diethylamin, die isomeren Propyl- und Butylamine, höhere linear-aliphatische Monoamine und cycloaliphatische Monoamine wie Cyclohexylamin. Weitere Beispiele sind Aminoalkohole, d. h. Verbindungen, die in einem Molekül Amino- und Hydroxylgruppen enthalten, wie z. B. Ethanolamin, N-Methylethanolamin, Diethanolamin oder 2-Propanolamin. Beispiele für Diamine sind 1,2-Ethandiamin, 1,6-Hexamethylendiamin, 1-Amino-3,3,5-trimethyl-5-aminomethyl-cyclohexan (Isophorondiamin), Piperazin, 1,4-Diamino-cyclohexan und Bis-(4-amino-cyclohexyl)-methan. Weiterhin kommen Adipinsaeuredihydrazid, Hydrazin bzw. Hydrazinhydrat in Frage. Weitere Beispiele sind Aminoalkohole, d. h. Verbindungen, die in einem Molekül Amino- und Hydroxylgruppen enthalten, wie z. B. 1,3-Diamino-2-propanol, N-(2-Hydroxyethyl)-ethylendiamin oder N,N-Bis(2-Hydroxyethyl)-ethylendiamin. Beispiele für Polyamine sind Diethylentriamin und Triethylentetramin.

In einer bevorzugten Form der Erfindung enthält das erfindungsgemäß eingesetzte mindestens eine Polymer zur Einstellung der Molmasse mindestens ein Monoamin und / oder mindestens ein Diamin als gegenüber Isocyanat reaktive Komponente A(v).

Bevorzugt enthalten die wässrigen Polyurethan- bzw. Polyurethan-Harnstoff-Dispersionen keine externen Emulgatoren.

In einer speziellen Ausführungsform der Erfindung enthält das mindestens eine Polymer A) einen Polyester aus Adipinsäure und Butandiol-1,4 als Komponente A(i), Butandiol-1,4 als Komponente A(ii), 1-Isocyanato-3,3,5-trimethyl-5-isocyanatomethyl-cyclohexan (IPDI) als Komponente A(iii), das Natriumsalz der N-(2-Aminoethyl)-2-aminoethansulfonsäure als Komponente A(iv) und Diethanolamin als Komponente A(v).

In der erfindungsgemäßen Formulierung kann bevorzugt ein oben beschriebenes Polymer A) vorliegen, das nach der Trocknung teilkristallin oder kristallin ist und eine Schmelztemperatur im Bereich von 30 bis 80 °C und eine Schmelzenthalpie von ≥ 35 J/g besitzt.

Es ist erfindungsgemäß auch möglich, dass in der Formulierung mehr als ein entsprechendes Polymer A), beispielsweise zwei, drei oder mehr entsprechende Polymere A) vorliegen.

In einer weiteren bevorzugten Ausführungsform liegt in der erfindungsgemäßen Formulierung neben dem genannten Polymer A) mindestens ein weiteres Polymer vor, insbesondere ein Polymer, welches abweichend von dem oben beschriebenen bevorzugten Aufbau gemäß Polymer A) als Komponente A(i) mindestens ein amorphes difunktionelles Polyesterpolyol mit einem zahlenmittleren Molekulargewicht von wenigstens 400 g/mol enthält.

Besonders bevorzugt ist die Mischung des Polymers A) und des mindestens einem weiteren Polymer nach der Trocknung teilkristallin und besitzt eine Schmelztemperatur im Bereich von 30 bis 80 °C und eine Schmelzenthalpie von ≥ 35 J/g.

Als Weichmacher bezeichnet man chemische Substanzen, die Polymeren zugesetzt werden, um diese für den Gebrauch oder die weitere Verarbeitung weich, flexibel, dehnbar und geschmeidig zu machen.

Als Weichmacher B) werden erfindungsgemäß bevorzugt schwerflüchtige niedermolekulare, polare Gruppen tragende Verbindungen eingesetzt. Bevorzugte Weichmacher sind Di(phenoxyethyl)formal sowie schwerflüchtige Ester auf Basis von aromatischen Carbonsäuren wie z.B. Phthalsäure, Isophthalsäure, Terepthalsäure, Benzoesäure, Trimellithsäure; aliphatischen Carbonsäuren wie z.B. Maleinsäure, Fumarsäure, Bernsteinsäure, Essigsäure, Propionsäure, Buttersäure, Adipinsäure, Azelainsäure, Sebazinsäure, Zitronensäure, Cyclohexandicarbonsäure, oder Fettsäuren wie z.B. Ölsäure, Rizinolsäure oder Stearinsäure; sowie Phosphorsäure-, Sulfon- oder Alkylsulfonsäureester. Auch epoxidierte Pflanzenöle wie z.B. epoxidiertes Leinöl und epoxidiertes Sojaöl sind bevorzugt.

Besonders bevorzugt werden Di(phenoxyethyl)formal, Dibutylterephthalat, Alkylsulfonsäureester des Phenols sowie Ester auf Basis Benzoesäure. Ganz besonders bevorzugt sind Di(phenoxyethyl)-formal, Dibutylterephthalat und Dipropylenglykoldibenzoat. In einer ganz besonders bevorzugten Ausführungsform der vorliegenden Erfindung wird Di(phenoxyethyl)formal oder Dipropylenglykoldibenzoat als Weichmacher B) eingesetzt. In einer ganz besonders bevorzugten Ausführungsform der vorliegenden Erfindung wird Dipropylenglykoldibenzoat als Weichmacher B) eingesetzt.

In einer bevorzugten Ausführungsform der vorliegenden Erfindung liegt kein Tackifierharz C) vor, d.h. die erfindungsgemäße Formulierung enthält eine Mischung aus
I. einer wässrigen Polyurethan- bzw. Polyurethan-Harnstoff-Dispersion, enthaltend als disperse Phase mindestens ein Polymer A), das nach der Trocknung teilkristallin oder kristallin ist und eine Schmelztemperatur im Bereich von 30 bis 80 °C und eine Schmelzenthalpie von ≥ 35 J/g besitzt,
II. mindestens einem Weichmacher B),
   wobei die Mischung, bezogen auf den insgesamt enthaltenen Feststoff,
   60 bis 80 Gew.-% des mindestens einen Polymers A),
   20 bis 40 Gew.-%, bevorzugt 21 bis 40 Gew.-%, des mindestens einen Weichmachers B) enthält und sich die Mengenanteile von A) und B) zu 100 Gew.-% addieren.

Bevorzugt enthält die Mischung gemäß dieser Ausführungsform, bezogen auf den insgesamt enthaltenen Feststoff,
65 bis 80 Gew.-% des mindestens einen Polymers A) und
20 bis 35 Gew.-%, bevorzugt 21 bis 35 Gew.-%, des mindestens einen Weichmachers B),
wobei sich die Mengenanteile von A) und B) zu 100 Gew.-% addieren.

Besonders bevorzugt enthält die Mischung gemäß dieser Ausführungsform, bezogen auf den Feststoff,
70 bis 80 Gew.-% des mindestens einen Polymers A) und
20 bis 30 Gew.-%, bevorzugt 21 bis 30 Gew.-%, des mindestens einen Weichmachers B),
wobei sich die Mengenanteile von A) und B) zu 100 Gew.-% addieren.

In einer zweiten erfindungsgemäßen Ausführungsform liegt mindestens ein Tackifierharz C) vor. Liegt mindestens ein Tackifierharz als Komponente C) in der erfindungsgemäßen Mischung vor, so liegt es beispielsweise in einer Menge von 0,1 bis 10 Gew.-%, bevorzugt 1 bis 10 Gew.-%, besonders bevorzugt 2 bis 8 Gew.-%, vor, wobei die Komponenten in den genannten Mengen vorliegen und sich die Mengenanteile von A), B) und C) zu 100 Gew.-% addieren.

Als Tackifierharze bezeichnet man Harze, die als Klebrigmacher wirken und die die Adhäsionsfähigkeit eines Kunststoffes oder eines Klebstoffes erhöhen.

Als Tackifierharze C) können sowohl Natur- als auch synthetische Harze eingesetzt werden, z.B. aliphatische, aromatisch modifizierte, aromatische und hydrierte Kohlenwasserstoffharze, Terpenharze, modifizierte Terpenharze und Terpenphenolharze, oder Baumharzderivate wie z.B. Kolophoniumharze, modifizierte Kolophoniumharze wie z.B. Harzester auf Basis von Kolophonium ("rosin ester"), Balsamharzderivate ("gum rosin") und Tallöl-Derivate ("tall oil rosin"). Die Tackifierharze können einzeln oder als Mischungen eingesetzt werden.

Bevorzugt werden als Tackifierharze C) Kolophoniumharze und modifizierte Kolophoniumharze eingesetzt. Besonders bevorzugt werden Harzester auf Basis von Kolophonium eingesetzt. Die Tackifier können als 100%ige Harze oder als Dispersion in den erfindungsgemäßen Formulierungen eingesetzt werden, sofern Verträglichkeit (z.B. Stabilität gegen Phasentrennung) gegeben ist. In einer besonders bevorzugten Ausführung der vorliegenden Erfindung werden als Komponente C) wässrige Dispersionen von Kolophoniumharzestern ("rosin ester dispersions") eingesetzt.

Bevorzugt werden die erfindungsgemäßen Formulierungen zur Verklebung nach dem Sprühkoagulationsverfahren eingesetzt. Bei diesem Verfahren werden die wässrigen Klebstoffformulierungen sowie ein Koagulationsmittel separat in einer 2K-Sprühpistole gefördert und im Sprühstrahl vermischt. Üblicherweise wird mittels Zerstäuberluft mit 0,1 bis 5 bar Druck versprüht; es kann aber auch mindestens eine der beiden Komponenten airless gefördert werden, wie z.B. in der WO 2015/137808 beschrieben. Die Koagulation der Dispersion findet im Sprühstrahl auf dem Weg zur Oberfläche des ersten Substrats statt; dabei verdunstet bereits ein Teil des in der Klebstoffdispersion enthaltenen Wassers. Das Klebstoffpolymer bildet auf der Oberfläche des ersten Substrats bei Auftreffen einen Film, der in noch nassem Zustand sofort klebrig ist. Da die Vermischung von Klebstoffdispersion und Koagulationsmittel erst im Sprühstrahl stattfindet, ist keine Topfzeit zu beachten. Aufgrund der Klebrigkeit des Polymerfilms in nassem Zustand kann die zweite Oberfläche sofort gefügt werden, idealerweise zum Beispiel unter Druck auf die Substrate gegen die Klebfläche. Die Anwendung von Druck durch Zusammenpressen der beiden Substratoberflächen ist von Vorteil, da sie die Festigkeit der Klebung erhöht. Ebenso ist es von Vorteil, wenn zumindest eines der beiden Substrate porös bzw. durchlässig gegenüber Wasser ist, um den Abtransport des Wasser aus der sich verfestigenden Klebstofffuge zu ermöglichen.

Als Koagulationsmittel kommen wässrige Lösungen von Salzen, bevorzugt von Metallen der ersten, zweiten und dritten Hauptgruppe des Periodensystems, in Frage, insbesondere, wenn sie eine gute Wasserlöslichkeit aufweisen. Bevorzugt werden Salze auf Basis zwei- oder dreiwertiger Kationen eingesetzt. Besonders bevorzugt werden Calciumchlorid, Zinksulfat oder Aluminiumsulfat eingesetzt. Ganz besonders bevorzugt wird Calciumchlorid eingesetzt. Es können auch Mischungen verschiedener Salze gemäß obiger Beschreibung als wässrige Lösung eingesetzt werden.

Die Konzentration der Salze in den als Koagulationsmittel geeigneten wässrigen Salzlösungen beträgt in der Regel 1 bis 20 Gew.-%, bevorzugt 2 bis 10 Gew.-% und besonders bevorzugt 3 bis 4 Gew.-%. Der Anteil der wässrigen Lösung des Koagulationsmittels bezogen auf die Summe Klebstofflösung plus Koagulationsmittellösung beträgt 0,1 bis 50 Gew.-%, bevorzugt 1 bis 30 Gew.-%, besonders bevorzugt 8 bis 20 Gew.-% und ganz besonders bevorzugt 12 bis 18 Gew.-%.

Alternativ können als Koagulationsmittel auch wässrige Lösungen von anorganischen oder organischen Säuren, bevorzugt Zitronensäure, Phosphorsäure oder Kohlensäure, sowie Mischungen einer oder mehrerer o.g. Salze mit einer oder mehrerer dieser Säuren eingesetzt werden.

Die Herstellung der erfindungsgemäßen Formulierungen erfolgt bevorzugt durch Mischen der wässrigen Polyurethan- bzw. Polyurethan-Harnstoff-Dispersion mit dem Weichmacher und gegebenenfalls dem Tackifierharz. Dies kann in beliebiger Reihenfolge erfolgen. Bevorzugt wird die Polyurethandispersion vorgelegt und anschließend werden gegebenenfalls das Tackifierharz C) und der Weichmacher B), gegebenenfalls nacheinander, unter Rühren zugegeben. Bevorzugt werden dabei Rührer mit ausreichend großem Scherkrafteintrag eingesetzt. Geeignete Rührer sind dem Fachmann bekannt oder können durch einfache Vorversuche ermittelt werden.

Die Verklebungen, hergestellt mit den erfindungsgemäßen Formulierungen nach dem Sprühkoagulationsverfahren, zeigen ausreichende Sofortfestigkeiten bei Schaumsubstraten mit hohem Raumgewicht von 70 kg/m³ und mehr und damit verbundener hoher Rückstellkraft.

Unter einem Schaumsubstrat versteht man ein Substrat aus Schaumstoff, wobei Schaumstoffe im allgemeinen künstlich hergestellte Stoffe mit zelliger Struktur und niedriger Dichte sind. Dabei kann man zwischen offenzelligen, geschlossenzelligen sowie gemischtzelligen Schaumstoffen unterscheiden. Je nach Härtegrad teilt man die Schaumstoffe in Hart- und Weichschäume ein. Zum Schäumen eignen sich fast alle Kunststoffe. Eine wichtige Kennzahl von Schäumen ist das Raumgewicht, auch Dichte genannt. Dieses wird in kg/m³ ausgedrückt und gibt das Gewicht eines Schaumstoffblockes mit einer Kantenlänge von 1 m an. Das Raumgewicht wird als das wichtigste Merkmal zur Unterscheidung der Schaumstoffe angesehen, andere Eigenschaften hängen im großen Maße davon ab. Je höher das Raumgewicht, umso stärker ist die Rückstellkraft und umso stärker sind die Anforderungen an die Sofortfestigkeiten der Klebstoffe.

Prinzipiell eignen sich die erfindungsgemäßen Formulierungen zur Verklebung aller Schaumsubstrate nach dem Sprühkoagulationsverfahren. Bevorzugt werden offenzellige und gemischtzellige Schaumsubstrate verklebt. Dabei können auch Schaumsubstrate mit hoher Raumdichte und hoher Rückstellkraft verklebt werden.

In einer bevorzugten Ausführung der Erfindung bestehen das oder die Schaumsubstrat(e) aus Polyurethan (zum Beispiel Polyether- und Polyester-Schäume) und/oder einem Kautschuk, wie beispielsweise Naturkautschuk (NR), Styrol-Butadien-Kautschuk (SBR), Ethylen-Propylen-Dien-Polymer (EPDM), Butadien-Acrylnitril-Kautschuk (NBR) oder Chloropren-Kautschuk (CR).

In einer besonders bevorzugten Ausführung der Erfindung bestehen das oder die Schaumsubstrat(e) aus Polyurethan.

Die Verklebungen, hergestellt mit den erfindungsgemäßen Formulierungen nach dem Sprühkoagulationsverfahren, zeigen Wärmebeständigkeiten von mindestens 70 °C, bevorzugt mindestens 80 °C.

Die offene Zeit, d.h. die Zeitspanne zwischen Auftragen der erfindungsgemäßen Formulierungen nach dem Sprühkoagulationsverfahren bis zum Zusammenfügen der Fügeteile, in der noch eine ausreichend gute Klebeverbindung erhalten wird, beträgt regelmäßig mindestens 5 Minuten, bevorzugt mindestens 8 Minuten.

Die erfindungsgemäßen Formulierungen zeichnen sich außerdem durch eine gute Haftung zu unterschiedlichsten anderen Substraten aus, wie zum Beispiel zu Schaum, Holz, Papier, Leder, Textilien, Kork, und Kunststoffen (Thermoplaste, Elastomere, Duromere, Komposite) wie unterschiedlichen Polyvinylchloridqualitäten, Polyurethanen, Polyvinylacetat, ABS, Kautschuken, Polyethylvinylacetat oder Polycarbonat.

Die Klebstoffzusammensetzungen, enthaltend die erfindungsgemäßen Formulierungen, eignen somit sich zum Verkleben beliebiger Substrate, bevorzugt aus den oben genannten Materialen.

Die vorliegende Erfindung betrifft daher auch die Verwendung der erfindungsgemäßen Formulierungen zum Verkleben von Substraten aus Schaum, Holz, Papier, Leder, Textilien, Kork, und Kunststoffen (Thermoplaste, Elastomere, Duromere, Komposite) wie unterschiedlichen Polyvinylchloridqualitäten, Polyurethanen, Polyvinylacetat, ABS, Kautschuken, Polyethylvinylacetat oder Polycarbonat, insbesondere zum Verkleben von Schaum auf Schaum, Schaum auf Holz, Schaum auf Kunststoffen, sowie von Textilien auf diversen Substraten.

Weiter bevorzugt betrifft die vorliegenden Erfindung die erfindungsgemäße Verwendung, wobei es sich bei mindestens einem der zu verklebenden Substrate um ein Schaumsubstrat ausgewählt aus der Gruppe umfassend Polyurethan-Schaum (zum Beispiel Polyether- und Polyester-Schäume) oder Kautschuk-Schaum (beispielsweise aus Naturkautschuk (NR), Styrol-Butadien-Kautschuk (SBR), Ethylen-Propylen-Dien-Polymer (EPDM), Butadien-Acrylnitril-Kautschuk (NBR) oder Chloropren-Kautschuk (CR)) handelt.

Des Weiteren betrifft die vorliegende Erfindung auch Matratzen oder Möbel, hergestellt unter Verwendung der erfindungsgemäßen Formulierungen.

### Beispiele

Nachstehend wird die Erfindung anhand der Beispiele näher erläutert. Folgende Methoden und Prüfmethoden kamen dabei zum Einsatz:

### A) Sprühkoagulationsverfahren:

Es wurde mit einer Standard-Spritzpistole für Zweikomponenten-Dispersionsklebstoffe, nämlich der PILOT III 2K von der Firma Walther Pilot appliziert. Dabei wurden der Klebstoff, sowie das Koagulationsmittel CaCl₂ (3 Gew.-%ige Lösung in Wasser) separat in die Sprühpistole gefördert, im Sprühstrahl vermischt und der Klebstoff koaguliert. Da die Vermischung erst im Sprühstrahl stattfand, war keine Topfzeit zu beachten. Es wurde das Verhältnis 86 Gew.-% Klebstoffdispersion und 14 Gew.-% CaCl₂-Lösung gewählt.

Die genauen Einstellungen der Spritzpistole sind dem Fachmann prinzipiell bekannt und können ohne ungebührlich hohen Aufwand auf den speziellen Fall zugeschnitten und durch einfache Vorversuche ermittelt werden. Die Mengenverhältnisse und das Auftragsgewicht konnten durch Rückwiegen der Vorlagebehälter sowie der Substrate ermittelt werden.

Folgende Einstellungen kamen zum Einsatz:
a.) Klebstoffkomponente: Förderdruck 1,3 bar
b.) Koagulationskomponente: Förderdruck 0,3 bar
c.) Zerstäuberluftdruck: 2,8 bar
d.) Bohrung (Düse) f. Komponente Klebstoff: 1,0 mm
e.) Bohrung (Düse) f. Komponente Koagulationsmittel: 0,4 mm
f.) Auftragsgewichte: 130 - 150 g/m² (nass)

### B) Bestimmung der Anfangsfestigkeit

### B1) Prüfkörper

### Variation Standardschaum

Als Prüfmaterial wurden PU-Schaumkörper wie folgt verwendet: Schaumqualität stn/schaumstofftechnik-Nürnberg GmbH, Typ ST 5540, Abmessung Prüfkörper 101 × 49 × 30 mm, Materialbasis PUR, Farbe weiß, Bruttoraumgewicht 40 kg/m³, Nettorohdichte 38 kg/m³ (ISO-845), Stauchhärte 5,5 kPa (40%, DIN EN ISO 3386) Zugfestigkeit > 120 kpa (DIN EN ISO 1798), Bruchdehnung > 110% (ISO-1798), Druckverformungsrest < 4 (50%/70 °C/22h, DIN EN ISO-1856)

### Variation harter Schaum

Als Prüfmaterial wurden PU-Schaumkörper (hart) wie folgt verwendet: Schaumqualität stn/schaumstoff-technik-Nürnberg GmbH, Typ ST 5540, Abmessung Prüfkörper 100 × 50 × 30 mm, Materialbasis PUR, Farbe weiß, Bruttoraumgewicht 70 kg/m³, Nettorohdichte 64 kg/m³ (ISO-845), Stauchhärte 12,0 kPa (40%, DIN EN ISO 3386) Zugfestigkeit > 100 kpa (DIN EN ISO 1798), Druckverformungsrest < 5 (50%/70 °C/22h, DIN EN ISO-1856)

### B2) Bestimmung der Anfangsfestigkeit:

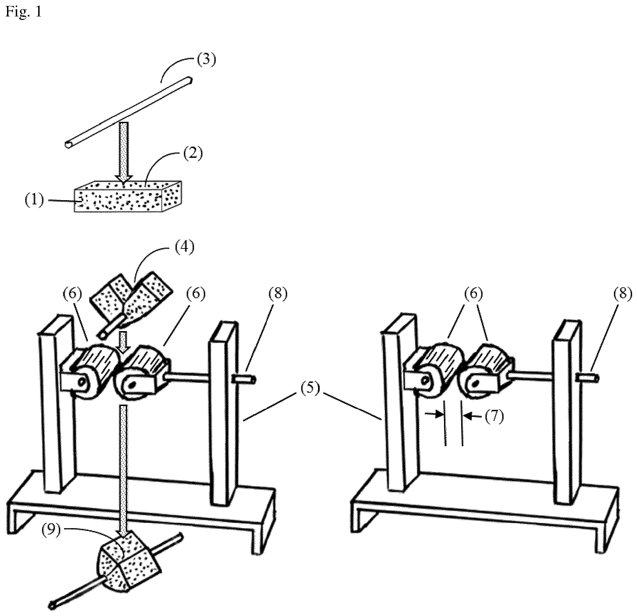

Als Prüfmaterial wurden PU-Schaumstoffprobekörper ST 5540 (1) eingesetzt. Die Apparatur zur Bestimmung der Anfangsfestigkeit ist in Figur 1 dargestellt. Zur Beurteilung der Anfangsfestigkeit wurden die Probekörper unmittelbar nach dem Klebstoff-Auftrag auf die Oberseite (2) der Schaumstoffkörper (1) mittels Sprühkoagulationsverfahrens (Aufwandmenge 130 bis 150 g/m² nass) mit einem Holzstab (3) (Vierkant 7 × 7 mm) in der Mitte geknickt (4) und mittels der Prüfvorrichtung (5) durch 2 Stahlrollen (6) (Durchmesser 40 mm, Länge 64 mm) geführt, deren tangentialer Abstand (7) zuvor mit einer Gewindespindel (8) auf 10 mm eingestellt wurde.

### B3) Beurteilung der Anfangsfestigkeit

Die Anfangsfestigkeit war ausreichend, wenn der Probekörper bzw. die Klebnaht (9) sich trotz der im Probekörper vorhandenen Rückstellkräfte nicht mehr öffnet (positive Bewertung).

Zur besseren Quantifizierung der Anfangsfestigkeit wurden diese wie folgt bewertet:
1 hervorragend (+++):
   Die Spannung wurde nach dem einmaligem Durchziehen des Prüfkörpers durch den Spalt zwischen den beiden Walzen sofort gehalten, und der Schaumkörper enthielt nach 120 sek beidseitigen Auseinanderziehens Materialausriss, bzw. dieser ließ sich nur mit einem hohen Kraftaufwand wieder öffnen.
2 sehr gut (++):
   Die Spannung wurde nach dem einmaligem Durchziehen des Prüfkörpers durch den Spalt zwischen den beiden Walzen sofort gehalten, der Schaumkörper ließ sich jedoch nach 120 sek durch beidseitiges Auseinanderziehen ohne hohen Kraftaufwand wieder einfach öffnen.
3 gut (+):
   Der Prüfkörper öffnete sich zwar nach dem einmaligem Durchziehen des Prüfkörpers durch den Spalt zwischen den beiden Walzen, jedoch nach einer Wiederholung oder per nachträglichem Handdruck (1x ca. 1 sek angedrückt) blieb der Prüfkörper geschlossen.
4 schlecht (-):
   Die Spannung wurde weder nach mehrmaligem Durchziehen durch die Walzen noch per Handdruck gehalten und der Prüfkörper öffnete sich.

### C) Testmethode Wärmebeständigkeit:

### Bestimmung der Wärmebeständigkeit

Zur Überprüfung der Wärmebeständigkeit wurden Prüfkörper aus PU-Schaumkörper der Variation Standardschaum (siehe B1) und einem Holzstab (Vierkant 7 × 7 mm) nach Methode B2 hergestellt. Die geschlossenen Prüfkörper wurden zunächst 24 Stunden bei Raumtemperatur und anschließend für 20 Minuten bei 40 °C im Umluftofen gelagert. Solange die Prüfkörper sich nicht öffneten, wurde alle 20 Minuten die Temperatur in 10 °C Schritten erhöht, bis ein Klebeversagen auftrat. Sie werden als wärmebeständig mit der entsprechenden Temperaturangabe bezeichnet, wenn bei dieser Temperatur nach 20 Minuten noch kein Klebeversagen zu beobachten war.

### D) Ermittlung der Glastemperaturen, Schmelztemperaturen und Schmelzenthalpien mittels DSC:

Die Glastemperaturen sowie Schmelztemperaturen und Schmelzenthalpien wurden mittels Differential Scanning Calorimetry (DSC) mit einem Kalorimeter Pyris Diamond DSC der Firma Perkin-Elmer bestimmt. Dazu wurde ein Film durch Rakeln der Dispersion mit 100 µm Nassfilmdicke auf einer Glasplatte hergestellt, 2 Stunden lang abgelüftet, und anschließend wurde dieser Film mitsamt der Glasplatte 3 Tage bei Raumtemperatur und 0% rel. Raumfeuchte in einer Trockenbox getrocknet. Anschließend wurde mit 10 mg Probenmaterial aus diesem Film die DSC-Kurve mit folgenden Messbedingungen aufgenommen: Schnelle Abkühlung auf die Starttemperatur -100 °C, danach Beginn von drei Aufheizungen von -100 °C bis +150 °C mit einer Heizrate von 20 K/min und einer Kühlrate von 320 K/min unter Helium-Atmosphäre und Kühlung mit flüssigem Stickstoff. Die Glastemperatur entspricht der Temperatur bei halber Höhe des Glasübergangs, wobei die dritte Aufheizung ausgewertet wurde. Für die Bestimmung der Schmelztemperaturen und Schmelzenthalpien wurde die erste Aufheizung ausgewertet.

### E) Testmethode offene Zeit:

Auf den Prüfköper (Standardschaum) mit den Maßen 22 x 5cm wird 100 g/m² Formulierung aufgetragen. Die Dicke des Prüfkörpers beträgt 3 cm. Dieser wird mittig geknickt und einmal mit der Handfläche zusammengefügt. Dieser Vorgang wird nach Zeitintervallen von jeweils 1 Minute mit der entsprechenden Menge vorbereiteter Prüfkörper solange wiederholt, bis die Verklebung versagt. Die offene Zeit ist die Zeit, die als letztes vor dem Versagen der Klebung ermittelt wurde. Es wurden maximal 20 Minuten gemessen.

### F) Einsatzstoffe

- Polyester I:: Polyesterdiol aus 1,4-Butandiol und Adipinsäure der OH-Z = 50
- Polyester II:: Polyesterdiol aus 1,6-Hexandiol und Phthalsäureanhydrid der OH-Z = 56
- Desmodur^{®} H:: Hexamethylendiisocyanat-1,6 (Covestro Deutschland AG, Leverkusen/DE)
- Desmodur^{®} I:: Isophorondiisocyanat (Covestro Deutschland AG, Leverkusen/DE)
- Dipropylenglycoldibenzoesäureester:: Weichmacher, Handelsprodukte sind beispielweise Synegis 9100 von Synegis, Mont-Saint-GuiberdBelgien oder Benzoflex 9-88 von Eastman Chemical Company
- Aquatac^{®} XR-4343:: wässrige Kolophonium Ester Dispersion mit 60 Gew.-% Festkörper (KratonCorporation, Almere/Netherlands) (Tackifierharz)

### Beispiel 1:

Herstellung einer wässrigen Polyurethan- bzw. Polyurethan-Harnstoff-Dispersion.

450 g Polyester I werden 1 Stunde bei 110 °C und 15 mbar entwässert. Bei 80 °C werden 30,11 g Desmodur^{®} H und anschließend 20,14 g Desmodur^{®} I zugegeben. Die Mischung wird bei 80 bis 90 °C gerührt, bis ein konstanter Isocyanatgehalt von 1,15 Gew.-% erreicht ist. Das Reaktionsgemisch wird in 750 g Aceton gelöst und dabei auf 48 °C abgekühlt. In die homogene Lösung wird eine Lösung aus 5,95 g Natriumsalz der N-(2-Aminoethyl)-2-aminoethansulfonsäure und 2,57 g Diethanolamin in 65 g Wasser unter kräftigem Rühren gegeben. Nach 30 Minuten wird durch Zugabe von 700 g Wasser dispergiert. Nach destillativer Abtrennung des Acetons wird eine wässrige Polyurethan-Polyharnstoff-Dispersion mit einen Feststoffgehalt von 40,0 Gew.-% erhalten.

Das enthaltene Polymer ist nach der Trocknung teilkristallin mit einer Schmelztemperatur von 48 °C und einer Schmelzenthalpie von 50,4 J/g.

### Beispiel 2:

Herstellung einer wässrigen Polyurethan- bzw. Polyurethan-Harnstoff-Dispersion.

1215 g Polyester II werden 1 Stunde bei 110 °C und 15 mbar entwässert. Bei 80 °C werden 4,6 g 1,6-Hexandiol und 179,0 g Desmodur^{®} H zugegeben und die Mischung wird 90 °C gerührt, bis ein konstanter Isocyanatgehalt von 2,28 Gew.-% erreicht ist. Das Reaktionsgemisch wird in 2490 g Aceton gelöst und dabei auf 48 °C abgekühlt. In die homogene Lösung wird eine Lösung aus 31,9 g Natriumsalz der N-(2-Aminoethyl)-2-aminoethansulfonsäure in 300 g Wasser unter kräftigem Rühren gegeben. Nach 30 Minuten wird durch Zugabe von 1150 g Wasser dispergiert. Nach destillativer Abtrennung des Acetons wird eine wässrige Polyurethan-Polyharnstoff-Dispersion mit einen Feststoffgehalt von 50,0 Gew.-% erhalten.

Das enthaltene Polymer ist nach der Trocknung amorph (ohne Schmelzpeak im DSC).

### Beispiel 3:

80 Gewichtsteile der Dispersion aus Beispiel 1 und 20 Gewichtsteile der Dispersion aus Beispiel 2 werden unter Rühren gemischt und homogenisiert. Die resultierende Mischung hat einen Festkörpergehalt von 42 Gew.-%.

Die Mischung der enthaltenden Polymere ist nach der Trocknung teilkristallin mit einer Schmelztemperatur von 52 °C und einer Schmelzenthalpie von 40 J/g.

### Beispiel 4 (Vergleich):

Zu 95,0 g der Polyurethandispersion aus Beispiel 1 werden unter kräftigem Rühren mit einem Scheibenrührer 5,0 g Di(propylenglykol)dibenzoesäureester zugegeben, weitere 4 h gerührt und anschließend 12 h bei Raumtemperatur gelagert. Bezogen auf den Feststoff enthält die Formulierung 88,4 Gew.-% Polyurethanpolymer und 11,6 Gew.-% Weichmacherharz.

### Beispiel 5:

Zu 90,0 g der Polyurethandispersion aus Beispiel 1 werden unter kräftigem Rühren mit einem Scheibenrührer 10,0 g Di(propylenglykol)dibenzoesäureester zugegeben, weitere 4 h gerührt und anschließend 12 h bei Raumtemperatur gelagert. Bezogen auf den Feststoff enthält die Formulierung 78,3 Gew.-% Polyurethanpolymer und 21,7 Gew.-% Weichmacherharz.

### Beispiel 6:

Zu 85,0 g der Polyurethandispersion aus Beispiel 1 werden unter kräftigem Rühren mit einem Scheibenrührer 15,0 g Di(propylenglykol)dibenzoesäureester zugegeben, weitere 4 h gerührt und anschließend 12 h bei Raumtemperatur gelagert. Bezogen auf den Feststoff enthält die Formulierung 69,4 Gew.-% Polyurethanpolymer und 30,6 Gew.-% Weichmacherharz.

### Beispiel 7 (Vergleich):

Zu 84,0 g der Polyurethandispersion aus Beispiel 1 werden unter kräftigem Rühren mit einem Scheibenrührer nacheinander 9,0 g Aquatac^{®} XR-4343 und 7,0 g Di(propylenglykol)dibenzoe-säureester zugegeben, weitere 4 h gerührt und anschließend 12 h bei Raumtemperatur gelagert. Man erhält eine zähe Masse, die auch nach Verdünnung mit Wasser nicht für das Sprühkoagulationsverfahren geeignet ist. Bezogen auf den Feststoff enthält die Formulierung 73,1 Gew.-% Polyurethanpolymer, 11,7 Gew.-% Tackifierharz und 15,2 Gew.-% Weichmacherharz.

### Beispiel 8 (Vergleich):

Zu 95,0 g der Polyurethandispersion aus Beispiel 3 werden unter kräftigem Rühren mit einem Scheibenrührer 5,0 g Di(propylenglykol)dibenzoesäureester zugegeben, weitere 4 h gerührt und anschließend 12 h bei Raumtemperatur gelagert. Bezogen auf den Feststoff enthält die Formulierung 88,9 Gew.-% Polyurethanpolymer und 11,1 Gew.-% Weichmacherharz.

### Beispiel 9:

Zu 90,0 g der Polyurethandispersion aus Beispiel 3 werden unter kräftigem Rühren mit einem Scheibenrührer 10,0 g Di(propylenglykol)dibenzoesäureester zugegeben, weitere 4 h gerührt und anschließend 12 h bei Raumtemperatur gelagert. Bezogen auf den Feststoff enthält die Formulierung 79,1 Gew.-% Polyurethanpolymer und 20,9 Gew.-% Weichmacherharz.

### Beispiel 10:

Zu 85,0 g der Polyurethandispersion aus Beispiel 3 werden unter kräftigem Rühren mit einem Scheibenrührer 15,0 g Di(propylenglykol)dibenzoesäureester zugegeben, weitere 4 h gerührt und anschließend 12 h bei Raumtemperatur gelagert. Bezogen auf den Feststoff enthält die Formulierung 70,4 Gew.-% Polyurethanpolymer und 29,6 Gew.-% Weichmacherharz.

### Beispiel 11:

Zu 80,0 g der Polyurethandispersion aus Beispiel 3 werden unter kräftigem Rühren mit einem Scheibenrührer 20,0 g Di(propylenglykol)dibenzoesäureester zugegeben, weitere 4 h gerührt und anschließend 12 h bei Raumtemperatur gelagert. Bezogen auf den Feststoff enthält die Formulierung 62,7 Gew.-% Polyurethanpolymer und 37,3 Gew.-% Weichmacherharz.

### Beispiel 12 (Vergleich):

Zu 70,0 g der Polyurethandispersion aus Beispiel 3 werden unter kräftigem Rühren mit einem Scheibenrührer 30,0 g Di(propylenglykol)dibenzoesäureester zugegeben, weitere 4 h gerührt und danach 12 h bei Raumtemperatur gelagert. Aufgrund der für das Sprühkoagulationsverfahren zu hohen Viskosität der Formulierung wurden anschließend 10 g Wasser zugegeben und eine weitere Stunde gerührt. Bezogen auf den Feststoff enthält die Formulierung 49,5 Gew.-% Polyurethanpolymer und 50,5 Gew.-% Weichmacherharz.

### Beispiel 13:

Zu 80,0 g der Polyurethandispersion aus Beispiel 3 werden unter kräftigem Rühren mit einem Scheibenrührer nacheinander 5,0 g Aquatac^{®} XR-4343 und 15,0 g Di(propylenglykol)dibenzoe-säureester zugegeben, weitere 4 h gerührt und anschließend 12 h bei Raumtemperatur gelagert. Bezogen auf den Feststoff enthält die Formulierung 65,1 Gew.-% Polyurethanpolymer, 5,8 Gew.-% Tackifierharz und 29,1 Gew.-% Weichmacherharz.

### Beispiel 14 (Vergleich):

Zu 70,0 g der Polyurethandispersion aus Beispiel 3 werden unter kräftigem Rühren mit einem Scheibenrührer nacheinander 5,0 g Aquatac^{®} XR-4343 und 30,0 g Di(propylenglykol)dibenzoe-säureester zugegeben, weitere 4 h gerührt und danach 12 h bei Raumtemperatur gelagert. Aufgrund der für das Koagulationsverfahren zu hohen Viskosität der Formulierung wurden anschließend 10 g Wasser zugegeben und eine weitere Stunde gerührt. Bezogen auf den Feststoff enthält die Formulierung 47,1 Gew.-% Polyurethanpolymer, 4,8 Gew.-% Tackifierharz und 48,1 Gew.-% Weichmacherharz.

### Beispiel 15 (Vergleich):

Zu 70,0 g der Polyurethandispersion aus Beispiel 3 werden unter kräftigem Rühren mit einem Scheibenrührer nacheinander 10,0 g Aquatac^{®} XR-4343 und 30,0 g Di(propylenglykol)dibenzoe-säureester zugegeben, weitere 4 h gerührt und danach 12 h bei Raumtemperatur gelagert. Aufgrund der für das Sprühkoagulationsverfahren zu hohen Viskosität der Formulierung wurden anschließend 5 g Wasser zugegeben und eine weitere Stunde gerührt. Bezogen auf den Feststoff enthält die Formulierung 44,9 Gew.-% Polyurethanpolymer, 9,2 Gew.-% Tackifierharz und 45,9 Gew.-% Weichmacherharz.

**Tabelle 1: Auswertung der erfindungsgemäßen Beispiele und der Vergleichsbeispiele (die Angaben in Gew.-% sind jeweils auf den Feststoff bezogen)**

| **Beispiel** | **4 (V)** | **5** | **6** | **7 (V)** | **8 (V)** | **9** | **10** | **11** | **12 (V)** | **13** | **14 (V)** | **15 (V)** |
|---|---|---|---|---|---|---|---|---|---|---|---|---|
| **PUD aus Beispiel 3 [Gew.-%]** | - | - | - | - | 88,9 | 79,1 | 70,4 | 62,7 | 49,5 | 65,1 | 47,1 | 44,9 |
| **PUD aus Beispiel 1 [Gew.-%]** | 88,4 | 78,3 | 69,4 | 73,1 | - | - | - | - | - | - | - | - |
| **Aquatec 4343 [Gew.-%]** | - | - | - | 15,2 | - | - | - | - | - | 5,8 | 4,8 | 9,2 |
| **Di(propylenglykol)di-benzoesäureester [Gew.-%]** | 11,6 | 21,7 | 30,6 | 11,7 | 11,1 | 20,9 | 29,6 | 37,3 | 50,5 | 29,1 | 48,1 | 45,9 |
| **Summe [Gew.-%]** | 100,00 | 100,00 | 100,00 | 100,00 | 100,00 | 100,00 | 100,00 | 100,00 | 100,00 | 100,00 | 100,00 | 100,00 |
| | | | | | | | | | | | | |
| **Wärmebeständigkeit [°C]** | 80 | 90 | 90 | n.m. | 90 | 90 | 80 | 80 | 60 | 80 | 50 | 40 |
| **Offene Zeit [min]** | 6 | 9 | 10 | n.m. | 2 | 8 | 9 | 15 | ≥ 20 | 9 | ≥ 20 | ≥ 20 |
| **Anfangsfestigkeit (Standardschaum)** | ++ | ++ | +++ | n.m. | ++ | ++ | ++ | +++ | ++ | +++ | ++ | ++ |
| **Anfangsfestigkeit (harter Schaum)** | - | + | ++ | n.m. | - | + | ++ | ++ | ++ | ++ | ++ | ++ |

| | | | | | | | | | | | | |
|---|---|---|---|---|---|---|---|---|---|---|---|---|
| (V) Vergleich n.m. nicht messbar | | | | | | | | | | | | |

## Patentansprüche

1. Formulierungen enthaltend eine Mischung aus
**I.** einer wässrigen Polyurethan- bzw. Polyurethan-Harnstoff-Dispersion, enthaltend als disperse Phase mindestens ein Polymer A), das nach der Trocknung teilkristallin oder kristallin ist und eine Schmelztemperatur im Bereich von 30 bis 80 °C und eine Schmelzenthalpie von ≥ 35 J/g besitzt,
**II.** mindestens einem Weichmacher B)
**III.** optional mindestens einem Tackifierharz C)
**dadurch gekennzeichnet, dass** die Mischung, bezogen auf den insgesamt enthaltenen Feststoff,
60 bis 80 Gew.-% des mindestens einen Polymers A),
20 bis 40 Gew.-% des mindestens einen Weichmachers B) und
0 bis 10 Gew.-% des mindestens einen Tackifierharzes C) enthält
und sich die Mengenanteile von A), B) und C) zu 100 Gew.-% addieren.

2. Formulierungen gemäß Anspruch 1, **dadurch gekennzeichnet, dass** die Mischung, bezogen auf den insgesamt enthaltenen Feststoff,
65 bis 80 Gew.-% des mindestens einen Polymers A),
20 bis 35 Gew.-% des mindestens einen Weichmachers B) und
0 bis 10 Gew.-% des mindestens einen Tackifierharzes C)
enthält und sich die Mengenanteile von A), B) und C) zu 100 Gew.-% addieren.

3. Formulierungen gemäß Anspruch 1 oder 2, **dadurch gekennzeichnet, dass** die Mischung, bezogen auf den insgesamt enthaltenen Feststoff,
70 - 80 Gew.-% des mindestens einen Polymers A),
20 bis 30 Gew.-% des mindestens einen Weichmachers B) und
0 bis 10 Gew.-% des mindestens einen Tackifierharzes C),
enthält und sich die Mengenanteile von A), B) und C) zu 100 Gew.-% addieren.

4. Formulierungen gemäß einem der Ansprüche 1 bis 3, **dadurch gekennzeichnet, dass** das mindestens eine Polymer A), das nach der Trocknung teilkristallin oder kristallin ist, eine Schmelztemperatur im Bereich von 35 bis 80 °C, besonders bevorzugt im Bereich von 40 bis 70 °C und ganz besonders bevorzugt im Bereich von 42 bis 55 °C aufweist.

5. Formulierungen gemäß einem der Ansprüche 1 bis 4, **dadurch gekennzeichnet, dass** das mindestens eine Polymer A), das nach der Trocknung teilkristallin oder kristallin ist, eine Schmelzenthalpie von ≥ 35 J/g, bevorzugt ≥ 40 J/g, besonders bevorzugt ≥ 45 J/g aufweist.

6. Formulierungen gemäß einem der Ansprüche 1 bis 5, **dadurch gekennzeichnet, dass** als mindestens ein Weichmacher B) schwerflüchtige niedermolekulare, polare Gruppen tragende Verbindungen, vorzugsweise Di(phenoxyethyl)formal, Dibutylterephthalat, Alkylsulfonsäureester des Phenols sowie Ester auf Basis Benzoesäure, eingesetzt werden.

7. Verfahren zur Verklebung von Substraten durch Vermischung einer Formulierung gemäß einem der Ansprüche 1 bis 6 mit einem Koagulationsmittel in einer 2K-Sprühpistole, wobei das Koagulationsmittel separat in die 2K-Sprühpistole gefördert und im Sprühstrahl vermischt wird und die Koagulation der Dispersion im Sprühstrahl auf dem Weg zur Oberfläche des ersten Substrats stattfindet, sich auf dieser bei Auftreffen ein Film bildet, der in noch nassem Zustand sofort klebrig ist und im nassem Zustand die zweite Oberfläche sofort gefügt wird, erforderlichenfalls unter Druck auf die Substrate gegen die Klebfläche.

8. Verwendung der Formulierungen nach einem der Ansprüche 1 bis 6 zum Verkleben von Substraten aus Schaum, Holz, Papier, Leder, Textilien, Kork, und Kunststoffen.

9. Verwendung nach Anspruch 8, **dadurch gekennzeichnet, dass** Schaum auf Schaum, Schaum auf Holz, Schaum auf Kunststoffen, sowie Textilien auf diversen Substraten verklebt werden.

10. Verwendung nach Anspruch 8 oder 9, **dadurch gekennzeichnet, dass** es sich bei mindestens einem der zu verklebenden Substrate um ein Schaumsubstrat ausgewählt aus der Gruppe umfassend Polyurethan-Schaum oder Kautschuk-Schaum handelt.

11. Matratzen oder Möbel, hergestellt unter Verwendung der Formulierung nach einem der Ansprüche 1 bis 6.

## Claims

1. Formulations containing a mixture of
I. an aqueous polyurethane or polyurethane-urea dispersion, containing as disperse phase at least one polymer A) which after drying is semicrystalline or crystalline and has a melting temperature in the range from 30 to 80°C and an enthalpy of fusion of ≥ 35 J/g,
II. at least one plasticizer B),
III. optionally at least one tackifier resin C), **characterized in that** the mixture, based on the solids present overall, contains
60% to 80% by weight of the at least one polymer A),
20% to 40% by weight of the at least one plasticizer B), and
0% to 10% by weight of the at least one tackifier resin C),
and the proportions of A), B) and C) add up to 100% by weight.

2. Formulations according to Claim 1, **characterized in that** the mixture, based on the solids present overall, contains
65% to 80% by weight of the at least one polymer A),
20% to 35% by weight of the at least one plasticizer B), and
0% to 10% by weight of the at least one tackifier resin C),
and the proportions of A), B) and C) add up to 100% by weight.

3. Formulations according to Claim 1 or 2, **characterized in that** the mixture, based on the solids present overall, contains
70% - 80% by weight of the at least one polymer A),
20% to 30% by weight of the at least one plasticizer B), and
0% to 10% by weight of the at least one tackifier resin C),
and the proportions of A), B) and C) add up to 100% by weight.

4. Formulations according to any of Claims 1 to 3, **characterized in that** the at least one polymer A) which after drying is semicrystalline or crystalline has a melting temperature in the range from 35 to 80°C, particularly preferably in the range from 40 to 70°C and very particularly preferably in the range from 42 to 55°C.

5. Formulations according to any of Claims 1 to 4, **characterized in that** the at least one polymer A) which after drying is semicrystalline or crystalline has an enthalpy of fusion of ≥ 35 J/g, preferably ≥ 40 J/g, particularly preferably ≥ 45 J/g.

6. Formulations according to any one of Claims 1 to 5, **characterized in that**, as the at least one plasticizer B), use is made of non-volatile, low molecular weight compounds bearing polar groups, preferably di(phenoxyethyl) formal, dibutyl terephthalate, alkylsulfonic esters of phenol and esters based on benzoic acid.

7. Process for adhesively bonding substrates by mixing a formulation according to any of Claims 1 to 6 with a coagulant in a two-component spray gun, wherein the coagulant is conveyed separately into the two-component spray gun and is mixed in the spray jet and the coagulation of the dispersion in the spray jet takes place on the path to the surface of the first substrate, on impact with said substrate forms a film which is immediately tacky in the still-wet state and in the wet state the second surface is immediately joined, if required with pressure on the substrates towards the adhesive surface.

8. Use of the formulations according to any of Claims 1 to 6 for the adhesive bonding of substrates of foam, wood, paper, leather, textiles, cork and plastics.

9. Use according to Claim 8, **characterized in that** adhesive bonding of foam on foam, foam on wood, foam on plastics, and textiles on various substrates is effected.

10. Use according to Claim 8 or 9, **characterized in that** at least one of the substrates to be adhesively bonded is a foam substrate selected from the group comprising polyurethane foam or rubber foam.

11. Mattresses or furniture, produced using the formulation according to any of Claims 1 to 6.

## Revendications

1. Formulations contenant un mélange constitué par
I. une dispersion aqueuse de polyuréthane ou de polyuréthane-urée, contenant, en tant que phase dispersée, au moins un polymère A) qui est partiellement cristallin ou cristallin après séchage et qui présente une température de fusion dans la plage de 30 à 80°C et une enthalpie de fusion ≥ 35 J/g,
II. au moins un plastifiant B)
III. éventuellement au moins une résine tackifiante C) **caractérisées en ce que** le mélange contient, par rapport à la totalité du solide contenu,
60 à 80% en poids dudit au moins un polymère A),
20 à 40% en poids dudit au moins un plastifiant B) et
0 à 10% en poids de ladite au moins une résine tackifiante C),
et la somme des proportions des quantités de A), B) et C) valant 100% en poids.

2. Formulations selon la revendication 1, **caractérisées en ce que** le mélange contient, par rapport à la totalité du solide contenu,
65 à 80% en poids dudit au moins un polymère A),
20 à 35% en poids dudit au moins un plastifiant B) et
0 à 10% en poids de ladite au moins une résine tackifiante C),
et la somme des proportions des quantités de A), B) et C) valant 100% en poids.

3. Formulations selon la revendication 1 ou 2, **caractérisées en ce que** le mélange contient, par rapport à la totalité du solide contenu,
70 à 80% en poids dudit au moins un polymère A),
20 à 30% en poids dudit au moins un plastifiant B) et
0 à 10% en poids de ladite au moins une résine tackifiante C),
et la somme des proportions des quantités de A), B) et C) valant 100% en poids.

4. Formulations selon l'une des revendications 1 à 3, **caractérisées en ce que** ledit au moins un polymère A), qui est partiellement cristallin ou cristallin après séchage, présente une température de fusion dans la plage de 35 à 80°C, de manière particulièrement préférée dans la plage de 40 à 70°C et de manière tout particulièrement préférée dans la plage de 42 à 55°C.

5. Formulations selon l'une des revendications 1 à 4, **caractérisées en ce que** ledit au moins un polymère A), qui est partiellement cristallin ou cristallin après séchage, présente une enthalpie de fusion ≥ 35 J/g, de préférence ≥ 40 J/g, de manière particulièrement préférée ≥ 45 J/g.

6. Formulations selon l'une des revendications 1 à 5, **caractérisées en ce qu'**on utilise, en tant qu'au moins un plastifiant B), des composés peu volatils de bas poids moléculaire, portant des groupes polaires, de préférence le di(phénoxyéthyl)formal, le téréphtalate de dibutyle, les esters de l'acide alkylsulfonique du phénol ainsi que les esters à base d'acide benzoïque.

7. Procédé pour le collage de substrats par mélange d'une formulation selon l'une des revendications 1 à 6 avec un agent de coagulation dans un pistolet de pulvérisation à 2 composants, l'agent de coagulation étant transporté séparément dans le pistolet de pulvérisation à 2 composants et mélangé dans le jet de pulvérisation et la coagulation de la dispersion ayant lieu dans le jet de pulvérisation sur le trajet vers la surface du premier substrat, un film se formant sur celle-ci lors du contact, lequel film est immédiatement collant dans l'état encore humide et la deuxième surface étant assemblée immédiatement à l'état humide, si nécessaire sous pression sur les substrats contre la surface collante.

8. Utilisation des formulations selon l'une des revendications 1 à 6 pour le collage de substrats en mousse, bois, papier, cuir, textiles, liège et matériaux synthétiques.

9. Utilisation selon la revendication 8, **caractérisée en ce que** de la mousse est collée sur de la mousse, de la mousse est collée sur du bois, de la mousse est collée sur des matériaux synthétiques et des textiles sont collés sur divers substrats.

10. Utilisation selon la revendication 8 ou 9, **caractérisée en ce qu'**il s'agit pour au moins l'un des substrats à coller, d'un substrat en mousse choisi dans le groupe comprenant la mousse de polyuréthane ou la mousse de caoutchouc.

11. Matelas ou meubles, fabriqués à l'aide de la formulation selon l'une des revendications 1 à 6.
